# EUROPÄISCHE PATENTSCHRIFT

(11) **EP 2 839 179 B1**
(45) Veröffentlichungstag und Bekanntmachung des Hinweises auf die Patenterteilung: **10.04.2019**
(21) Anmeldenummer: 13706527.2
(22) Anmeldetag: 27.02.2013
(51) Int. Cl.: B60G 11/27, F16F 9/05

(54) **ABROLLKOLBEN FÜR EINEN LUFTFEDERROLLBALG**
ROLLING PISTON FOR AN AIR SPRING ROLLING BELLOWS
PISTON DÉROULEUR POUR SOUFFLET DE SUSPENSION PNEUMATIQUE

(30) Priorität: 18.04.2012 DE 102012103358
(43) Veröffentlichungstag der Anmeldung: 25.02.2015
(73) Patentinhaber: ContiTech Luftfedersysteme GmbH, 30165 Hannover (DE)
(72) Erfinder: RECK, Siegfried, 31582 Nienburg (DE); STAHMER, Reinhard, 30823 Garbsen (DE)
(74) Vertreter: Kilsch, Armin Ralph
(86) Internationale Anmeldenummer: PCT/EP2013/053867
(87) Internationale Veröffentlichungsnummer: WO 2013/156190

(56) Entgegenhaltungen:
- EP-A2- 0 123 171
- EP-A2- 0 351 678
- WO-A1-2004/109149
- WO-A1-2007/104671
- DE-U1- 8 903 264

## Beschreibung

Die Erfindung betrifft einen Abrollkolben aus Kunststoff für einen Luftfederrollbalg, wobei Luftfederrollbalg und Abrollkolben zwischen einer gefederten oder einer ungefederten Masse angeordnet sind, insbesondere zwischen Karosserie und Fahrwerk eines Fahrzeuges, wobei der Abrollkolben aus mindestens zwei miteinander verbundenen Kolbenteilen besteht, insbesondere aus einem im Wesentlichen topfförmigen und rotationssymmetrischen Kolbenunterteil und einem komplementär dazu ausgebildeten Kolbenoberteil.

Das Kolbenoberteil weist üblicherweise Ringprofile und/oder Ringflansche auf, z.B. einen Dichtkonus, zur Anlage und zum luftdichten Anschluss des Luftfederrollbalgs an den Abrollkolben.

Im Stand der Technik sind verschiedene Arten solcher Abrollkolben bekannt. Einerseits existieren relativ schwere Abrollkolben aus Stahlblech mit nutzbarem Innenvolumen, die mit den entsprechenden Anschlussteilen verschraubt oder verschweißt werden. Der Abrollkolben aus Stahlblech wird als Tiefziehteil mit Konus-Dichtsitz für die Balgaufnahme hergestellt ist dementsprechend schwer und in der Herstellung teuer.

Andererseits existieren relativ leichte einteilige Kunststoffkolben mit nicht oder nur teilweise genutztem Innenvolumen und angeformten oder eingelassenen Befestigungsteilen aus Metall, mit denen eine Verbindung mit den Anschlussteilen realisiert werden kann. Einen Kunststoffkolben mit vollständig genutztem Innenvolumen offenbart die EP 1 862 335 B1. Beschrieben ist hier ein Luftfederkolben, der aus einem becherförmigen Teil und einem Abdeckteil besteht, welche im Bereich ihrer Wandungen stumpf verschweißt werden.

Die DE 10 2007 035 640 A1 offenbart einen als Hohlkörper ausgebildeten Tauchkolben für eine Luftfeder, der aus zwei luftdicht miteinander verbundenen Teilen besteht, nämlich aus einem topfförmigen Unterteil mit Boden und Mantel und aus einem Oberteil.

Ausgehend von den bekannten Luftfedern mit Abrollkolben aus Stahl sind mit dem Ziel, Gewicht und Kosten für die Herstellung der Kolben zu senken, Kolben aus glasfaserverstärktem Kunststoff (GFK), etwa aus Polyamid PA 66 GF 30, entwickelt worden. Den Vorteilen dieses Materials stehen aber auch Nachteile gegenüber. Diese bestehen darin, dass das Material relativ hart und spröde ist und zersplittern kann, wenn es aufgrund von Ermüdung oder mechanischer Überlastung bricht.

Insbesondere dann, wenn ein aus glasfaserverstärktem Kunststoff bestehender Abrollkolben beschädigt wird, ist es möglich, dass das Material spröde bricht, wobei scharfkantige Bruchstücke und Splitter entstehen können.

Bei Abrollkolben, deren Innenvolumen zur Vergrößerung des Arbeitsraumes der Luftfeder genutzt wird, erhöht sich die daraus entstehende Gefahr, weil der Innendruck die entstehenden Splitter beschleunigen kann.

Typischerweise werden Kunststoffkolben durch Spritzgussverfahren gefertigt. Ein solcher als Spritzgußteil gefertigter Kolben kann Schwachstellen infolge von Fließfronten aufweisen, die bei Kolben mit voll genutztem Innenvolumen oft in den besonders hoch belasteten Zonen zwischen den Verstärkungsrippen liegen.

Zudem können üblicherweise Kolben mit voll genutztem Innenvolumen und konischer Abdichtung zum Balg derzeit nur als zweiteilige Kolben gefertigt werden, die durch Reibschweißen miteinander verbunden sind. Die Reibschweißnaht ist eine Stelle, bei der ebenfalls Unstetigkeiten der Werkstoffparameter entstehen können, beispielsweise auch dadurch, dass bei glasfaserverstärkten Kunststoffen die Glasfasern in der Schweißnaht nicht ausgerichtet sind und damit eine geringere Verstärkungswirkung aufweisen.

Der Erfindung lag also die Aufgabe zu Grunde, einen leichten und einfach herzustellenden Abrollkolben aus Kunststoff, respektive glasfaserverstärktem Kunststoff (GFK) bereitzustellen, der im Falle seiner Beschädigung keine scharfkantigen Splitter in die Umgebung abgibt, der die Nachteile einer Reibschweißnaht nicht aufweist, der die Wirkungen von Fließfronten im Spritzgussprozess entschärft und dessen Innenvolumen vollständig für die Federung nutzbar ist.

Gelöst wird diese Aufgabe durch die Merkmale des Hauptanspruchs. Weitere vorteilhafte Ausbildungen sind in den Unteransprüchen offenbart.

Dabei ist der Abrollkolben aus einem geschichteten und aus abwechselnden Lagen von Kunststoff und elastomerem Material bestehenden Verbundmaterial aufgebaut.

Der Kerngedanke besteht darin, einen Abrollkolben aus Kunststoff oder faserverstärktem Kunststoff (GFK, CFK, Carbon-Nanotubes verst. Kunststoff) durch eine Konstruktion aus Verbundmaterial so zu gestalten, dass das elastomere Material ein sprödes Ausbrechen von Kunststoffteilen bei Überlastung verhindert. Dadurch ist die Gefahr, dass im Falle einer Beschädigung des Kolbens Bruchstücke herausgeschleudert werden, weitgehend gebannt.

Eine vorteilhafte Weiterbildung besteht darin, dass das Kolbenoberteil und das Kolbenunterteil unter Anordnung einer Zwischenlage aus elastomerem Material mindestens teilweise ineinander gesteckt sind. Eine solche Ausbildung erlaubt es, zwei Spritzgussteile leicht zu einem Kolben zu montieren.

Eine weitere vorteilhafte Ausbildung besteht darin, dass die Lage oder Zwischenlage aus elastomerem Material als Elastomerkleber ausgebildet ist. Bei z.B. zwei konzentrisch angeordneten Teilkörpern aus faserverstärktem Kunststoff, dem Innenkolben und dem Außenkolben, zwischen denen eine elastomere Klebeschicht angeordnet ist, die beide Teilkörper fest miteinander verbindet (verklebt), wird die Sicherheit gegen sprödes Ausbrechen von Kunststoffteilen weiter erhöht. Wenn einer der beiden Teilkörper oder beide Teilkörper brechen, halten die Klebkräfte die Bruchstücke an den Oberflächen der elastomeren Klebeschicht fest.

Eine weitere vorteilhafte Ausbildung besteht darin, dass die Lage oder Zwischenlage aus elastomerem Material eine Gummilage beinhaltet, insbesondere eine mindestens auf einen Kolbenteil aufvulkanisierte Gummilage. Eine solche Lage erlaubt durch ihre Elastizität einen Spannungsabbau zwischen den dadurch verbundenen Kolbenteilen und erhöht somit die Belastbarkeit und auch die Sicherheit gegen Steinschlag bei Anordnung eines solchen Kolbens z.B. in einem LKW-Fahrwerk.

Eine weitere vorteilhafte Ausbildung besteht darin, dass der Abrollkolben als hohler Tauchkolben ausgebildet ist, wobei der Innenraum des Abrollkolbens mit dem Innenraum der Luftfeder in Verbindung steht und der Abrollkolben ein topfförmiges Kolbenunterteil und ein mit dem Kolbenunterteil durch die Zwischenlage aus elastomerem Material luftdicht verbundenes und als Deckel ausgebildetes Kolbenoberteil aufweist. Dabei wirkt die elastomere Klebeschicht und/oder die Gummischicht gleichzeitig als Dichtung zwischen den Teilkörpern.

Weitere vorteilhafte Ausbildungen bestehen je nach Anwendung und Belastungskollektiv darin, dass Kolbenoberteil und Kolbenunterteil in Form einer konischen Steckverbindung, in Form einer stufigen Steckverbindung oder auch in Form einer Spundung miteinander verbunden sind. Eine solche konische, auch eine zylindrische oder mehrstufige Verbindung verbessert jeweils die Eigenschaften des Abrollkolbens im Hinblick auf Splitterfestigkeit und Dauerhaltbarkeit.

Die erfindungsgemäße Konstruktion des Kolbens aus zwei derart verbundenen Teilkörpern erhöht die Sicherheit gegen das Zersplittern im Falle seiner Beschädigung, weil die elastomeren Schichten/ Klebeschichten zwischen den Teilkörpern die entstehenden Bruchstücke und Splitter bindet. Die zweiteilige Konstruktion hat außerdem den Vorteil, dass fertigungstechnisch unvermeidliche Fließfronten der Teilkörper gegeneinander versetzt angeordnet werden können, um die Stabilität des Kolbens insgesamt zu erhöhen.

Die Ausführung als Kombination aus einem Innen- und einem Außenkonus hat den Vorteil, dass sich die konischen Teile bei der Herstellung leicht ausformen lassen. Außerdem entstehen durch die betriebliche Last Kräfte in radialer Richtung, die den Konussitz und die Abdichtwirkung verstärken. Der Einsatz mehrerer elastomerer Schichten, beispielsweise durch Stufung oder in Form von Verbindungen durch Spundungen, erhöht die Belastbarkeit und die Sicherheit gegen das Zersplittern, weil die Bruchstücke, die entstehen können, an der größeren Oberfläche oder innerhalb der Stufungen gehalten werden.

Ein weiterer Vorteil ist die Gutmütigkeit gegenüber Steinschlag: Ein Riss des Außenmantels bedeutet noch keinen Druckverlust, weil die Elastomer- und/oder Klebeschicht, insbesondere gestufte Schichten oder Schichten in Spundungen, ein Weiterreißen des Kunststoffs und somit ein Bersten unter Innendruck sicher verhindern.

Besonders eignet sich ein solcher Abrollkolben zur Anwendung bei einer Luftfedereinrichtung für ein Fahrzeug, beispielsweise für einen LKW.

Ein besonders vorteilhaftes Verfahren zur Herstellung eines solchen Abrollkolbens besteht darin, dass nach Herstellung eines ersten Kolbenteiles dieses mit einer anvulkanisierten Gummischicht versehen und danach mindestens ein weiteres Kolbenteil im Spritzgussverfahren auf die Gummischicht aufgespritzt wird. Somit wird eine (zweite) im Spritzgussverfahren leicht herzustellende Kolbenhälfte nachträglich auf die erste bereits in einem Spritzgussverfahren hergestellte Kolbenhälfte mit anvulkanisierter Gummischicht aufgespritzt.

Anhand eines Ausführungsbeispieles soll die Erfindung näher erläutert werden. Es zeigen
- Fig. 1: einen erfindungsgemäßen Abrollkolben für eine Luftfeder
- Fig. 2: eine andere Ausführung eines erfindungsgemäßen Abrollkolbens
- Fig. 3: ein Detail des erfindungsgemäßen Abrollkolbens gemäß Fig. 2
- Fig. 4: eine weitere Ausführung eines erfindungsgemäßen Abrollkolbens

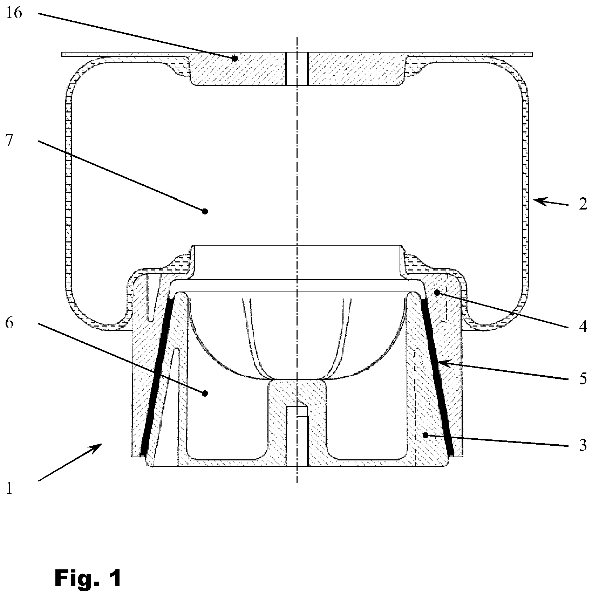

Die Fig. 1 zeigt einen erfindungsgemäßen Abrollkolben 1 aus glasfaserverstärktem Kunststoff für einen Luftfederrollbalg 2, wobei Luftfederrollbalg und Abrollkolben zwischen Karosserie und Fahrwerk eines Fahrzeuges angeordnet sind, wobei Karosserie und Fahrwerk hier nicht näher dargestellt sind. Der Luftfederrollbalg 2 ist an seinem oberen Ende mit einem Luftfederdeckel 16 verschlossen, der eine Luftzufuhr aufweist und mit der Karosserie verbunden ist.

Der Abrollkolben 1 besteht aus zwei miteinander verbundenen Kolbenteilen, nämlich hier aus einem im Wesentlichen topfförmigen und rotationssymmetrischen Kolbenunterteil 3 und einem komplementär dazu ausgebildeten Kolbenoberteil 4, wobei Kolbenoberteil 4 und Kolbenunterteil 3 unter Anordnung einer Zwischenlage 5 aus elastomerem Material ineinander gesteckt sind und so einen Abrollkolben 1 aus einem geschichteten und aus abwechselnden Lagen von glasfaserverstärktem Kunststoff und elastomerem Material bestehenden Verbundmaterial bilden.

Die Lage oder Zwischenlage 5 aus elastomerem Material besteht hier aus einer Gummilage, welche mit beiden Kolbenteilen 3 und 4 jeweils durch Vulkanisation verbunden ist.

Der Abrollkolben 1 ist hier als hohler Tauchkolben ausgebildet, wobei der Innenraum 6 des Abrollkolbens 1 mit dem Innenraum 7 der Luftfeder 2 in Verbindung steht.

Kolbenoberteil 4 und Kolbenunterteil 3 sind hier in Form einer konischen Steckverbindung miteinander verbunden und formen mit der elastomeren Zwischenlage ein Bauteil aus Verbundmaterial aus glasfaserverstärktem Kunststoff und Gummi. Die Zwischenlage aus anvulkanisiertem Gummi verbindet beide Kolbenteile vollständig luftdicht und erlaubt die problemlose Nutzung des Kolbeninnenraumes 6 als zusätzlichen Arbeitsraum.

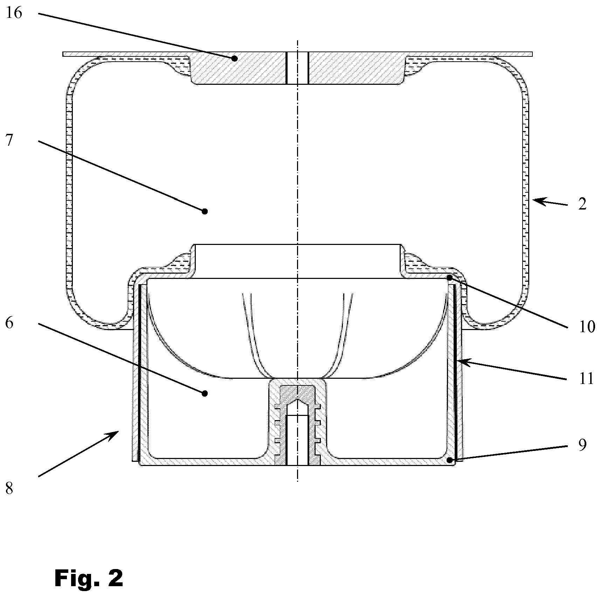

Die Fig. 2 zeigt eine weitere Ausführung eines erfindungsgemäßen Abrollkolbens 8, bei dem Kolbenoberteil 10 und Kolbenunterteil 9 in Form einer stufigen Steckverbindung miteinander verbunden sind. Hier sind Kolbenoberteil 10 und Kolbenunterteil 9 unter Anordnung einer Zwischenlage 11 in Form einer Klebefolie miteinander verbunden und bilden so einen Abrollkolben 8 aus einem geschichteten und aus abwechselnden Lagen von glasfaserverstärktem Kunststoff und Klebefolie bestehenden Verbundmaterial. Die Kraftübertragung zwischen Kolbenoberteil 10 und Kolbenunterteil 9 erfolgt bei dieser Ausbildung nicht über die Klebeschicht/Klebefolie sondern über direkten Kontakt der Formteile an den ausgebildeten Vorsprüngen.

Beim Abrollkolben 8 wurde dabei zunächst das Kolbenunterteil 9 hergestellt und mit der Klebefolie versehen. Danach wurde das Kolbenoberteil 10 aufgebracht.

Alternativ können die zwei konischen Kolbenteile 9 und 10 auch mit einem Kleber vergossen werden.

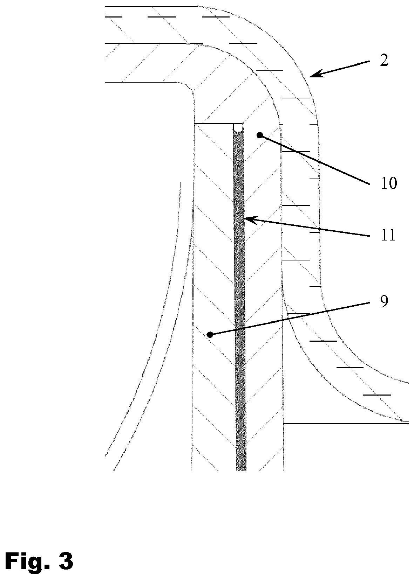

Fig. 3 zeigt zur Verdeutlichung noch einmal ein Detail eines erfindungsgemäßen Abrollkolbens 8 mit Kolbenoberteil 10, Kolbenunterteil 9 und einem vergossenen Kleber als Zwischenlage 11. Man sieht, dass sich das Kolbenoberteil 10 über einen im Kopfbereich ausgebildeten Vorsprung direkt auf der Stirnseite des Kolbenunterteils 9 abstützt und so einen Spalt für die Vergussmasse bildet. Die Luftfedertragkraft wird hier direkt vom Kolbenoberteil 10 auf das Kolbenunterteil 9 übertragen, ohne die Kleberschicht auf Scherung zu belasten.

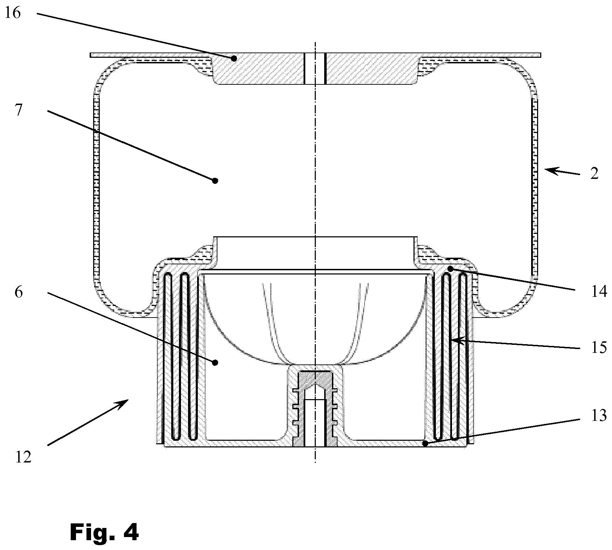

Die Fig. 4 zeigt eine weitere Ausführung eines erfindungsgemäßen Abrollkolbens 12, bei dem Kolbenoberteil 14 und Kolbenunterteil 13 in Form einer Spundung miteinander verbunden sind, hier mit einer im Querschnitt lamellenförmigen Spundung. Hier sind Kolbenoberteil 14 und Kolbenunterteil 13 unter Anordnung einer Zwischenlage 15 aus Elastomerkleber miteinander verbunden und bilden so einen Abrollkolben 12 aus einem geschichteten und aus abwechselnden Lagen von glasfaserverstärktem Kunststoff und elastomerem Material bestehenden Verbundmaterial. Der Elastomerkleber ist hierbei vor Aushärtung fließfähig und füllt die Zwischenräume zwischen den Kolbenteilen aus.

### Bezugszeichenliste

### (Teil der Beschreibung)

- 1: Abrollkolben
- 2: Luftfederrollbalg
- 3: Kolbenunterteil
- 4: Kolbenoberteil
- 5: Elastomere Zwischenlage (Gummi anvulkanisiert)
- 6: Innenraum Abrollkolben
- 7: Innenraum Luftfeder
- 8: Abrollkolben
- 9: Kolbenunterteil
- 10: Kolbenoberteil
- 11: Elastomere Zwischenlage, ausgebildet als Kleberschicht
- 12: Abrollkolben
- 13: Kolbenunterteil
- 14: Kolbenoberteil
- 15: Elastomere Zwischenlage aus Elastomerkleber
- 16: Luftfederdeckel

## Patentansprüche

1. Abrollkolben (1) aus Kunststoff für einen Luftfederrollbalg (2) wobei Luftfederrollbalg (2) und Abrollkolben (1) zwischen einer gefederten oder einer ungefederten Masse angeordnet sind, wobei der Abrollkolben (1, 8, 12) aus mindestens zwei miteinander verbundenen Kolbenteilen (3, 4, 8, 9, 13, 14) besteht, insbesondere aus einem im Wesentlichen topfförmigen und rotationssymmetrischen Kolbenunterteil (3, 8, 13) und einem komplementär dazu ausgebildeten Kolbenoberteil (4, 9, 14),
**dadurch gekennzeichnet,**
**dass** der Abrollkolben (1, 8, 12) aus einem geschichteten und aus abwechselnden Lagen von Kunststoff und elastomerem Material bestehenden Verbundmaterial aufgebaut ist.

2. Abrollkolben nach Anspruch 1, bei dem Kolbenoberteil (4, 9, 14) und Kolbenunterteil (3, 8, 13) unter Anordnung einer Zwischenlage (5, 11, 15) aus elastomerem Material mindestens teilweise ineinander gesteckt sind.

3. Abrollkolben nach Anspruch 1 oder 2, bei dem die Lage oder Zwischenlage (15) aus elastomerem Material als Elastomerkleber ausgebildet ist.

4. Abrollkolben nach einem der Ansprüche 1 bis 3, bei dem die Lage oder Zwischenlage aus elastomerem Material eine Gummilage (11) beinhaltet, insbesondere eine mindestens auf einen Kolbenteil aufvulkanisierte Gummilage.

5. Abrollkolben nach einem der Ansprüche 1 bis 4, ausgebildet als hohler Tauchkolben, wobei der Innenraum (6) des Abrollkolbens (1) mit dem Innenraum (7) der Luftfeder (2) in Verbindung steht und der Abrollkolben (1) ein topfförmiges Kolbenunterteil (3, 8, 13) und ein mit dem Kolbenunterteil durch die Zwischenlage (5, 11, 15) aus elastomerem Material luftdicht verbundenes und ggf. als Deckel ausgebildetes Kolbenoberteil (4, 9, 14) aufweist.

6. Abrollkolben nach einem der Ansprüche 2 bis 5, bei dem Kolbenoberteil (4, 9, 14) und Kolbenunterteil (3, 8, 13) in Form einer im Wesentlichen konischen Steckverbindung miteinander verbunden sind.

7. Abrollkolben nach einem der Ansprüche 2 bis 6, bei dem Kolbenoberteil (4, 9, 14) und Kolbenunterteil (3, 8, 13) in Form einer stufigen Steckverbindung miteinander verbunden sind.

8. Abrollkolben nach einem der Ansprüche 2 bis 7, bei dem Kolbenoberteil (4, 9, 14) und Kolbenunterteil (3, 8, 13) in Form einer Spundung miteinander verbunden sind.

9. Luftfedereinrichtung für ein Fahrzeug mit einem Abrollkolben nach einem der Ansprüche 1 bis 8.

10. Verfahren zur Herstellung eines Abrollkolbens nach einem der Ansprüche 1 bis 8, bei dem nach Herstellung eines ersten Kolbenteiles letzteres mit einer anvulkanisierten Gummischicht versehen und danach mindestens ein weiteres Kolbenteil im Spritzgussverfahren auf die Gummischicht aufgespritzt wird.

## Claims

1. Rolling piston (1) made of plastic for an air spring rolling bellows (2), the air spring rolling bellows (2) and the rolling piston (1) being arranged between a sprung or an unsprung mass, the rolling piston (1, 8, 12) consisting of at least two piston parts (3, 4, 8, 9, 13, 14) connected to one another, in particular a substantially pot-shaped and rotationally symmetrical lower piston part (3, 8, 13) and an upper piston part (4, 9, 14) formed so as to be complementary thereto,
**characterized**
**in that** the rolling piston (1, 8, 12) is made up of a layered composite material consisting of alternating layers of plastic and elastomeric material.

2. Rolling piston according to Claim 1, in which the upper piston part (4, 9, 14) and the lower piston part (3, 8, 13) are at least partially fitted one inside the other, with an intermediate layer (5, 11, 15) of elastomeric material arranged in between.

3. Rolling piston according to Claim 1 or 2, in which the layer or intermediate layer (15) of elastomeric material is formed as an elastomer adhesive.

4. Rolling piston according to one of Claims 1 to 3, in which the layer or intermediate layer of elastomeric material comprises a rubber layer (11), in particular a rubber layer vulcanized onto one part of the piston.

5. Rolling piston according to one of Claims 1 to 4, formed as a hollow plunger piston, the interior space (6) of the rolling piston (1) being in connection with the interior space (7) of the air spring (2) and the rolling piston (1) having a pot-shaped lower piston part (3, 8, 13) and an upper piston part (4, 9, 14) that is connected in an airtight manner to the lower piston part by the intermediate layer (5, 11, 15) of elastomeric material and is optionally formed as a cover.

6. Rolling piston according to one of Claims 2 to 5, in which the upper piston part (4, 9, 14) and the lower piston part (3, 8, 13) are connected to one another in the form of a substantially conical plug-in connection.

7. Rolling piston according to one of Claims 2 to 6, in which the upper piston part (4, 9, 14) and the lower piston part (3, 8, 13) are connected to one another in the form of a stepped plug-in connection.

8. Rolling piston according to one of Claims 2 to 7, in which the upper piston part (4, 9, 14) and the lower piston part (3, 8, 13) are connected to one another in the form of a tongue-and-groove joint.

9. Air spring device for a vehicle with a rolling piston according to one of Claims 1 to 8.

10. Method for producing a rolling piston according to one of Claims 1 to 8, in which, after producing a first piston part, the latter is provided with a vulcanized-on rubber layer and then at least one further piston part is molded onto the rubber layer by the injection-molding process.

## Revendications

1. Piston dérouleur (1) en matière plastique pour un soufflet de suspension pneumatique (2), dans lequel le soufflet de suspension pneumatique (2) et le piston dérouleur (1) sont disposés entre une masse suspendue ou une masse non suspendue, dans lequel le piston dérouleur (1, 8, 12) se compose d'au moins deux parties de piston (3, 4, 8, 9, 13, 14) assemblées l'une à l'autre, en particulier d'une partie inférieure de piston (3, 8, 13) essentiellement en forme de pot et ayant la symétrie de rotation et d'une partie supérieure de piston (4, 9, 14) de forme complémentaire à celle-ci, **caractérisé en ce que** le piston dérouleur (1, 8, 12) est constitué d'un matériau composite composé de couches stratifiées et alternées de matière plastique et de matériau élastomère.

2. Piston dérouleur selon la revendication 1, dans lequel la partie supérieure de piston (4, 9, 14) et la partie inférieure de piston (3, 8, 13) sont au moins en partie engagées l'une dans l'autre avec agencement d'une couche intermédiaire (5, 11, 15) en matériau élastomère.

3. Piston dérouleur selon la revendication 1 ou 2, dans lequel la couche ou la couche intermédiaire (15) en matériau élastomère est formée par une colle élastomère.

4. Piston dérouleur selon l'une quelconque des revendications 1 à 3, dans lequel la couche ou la couche intermédiaire en matériau élastomère contient une couche de gomme (11), en particulier une couche de gomme vulcanisée au moins sur une partie de piston.

5. Piston dérouleur selon l'une quelconque des revendications 1 à 4, réalisé sous forme de piston plongeur creux, dans lequel l'espace intérieur (6) du piston dérouleur (1) est en communication avec l'espace intérieur (7) de la suspension pneumatique (2) et le piston dérouleur (1) présente une partie inférieure de piston (3, 8, 13) et une partie supérieure de piston (4, 9, 14) assemblée de façon étanche à l'air à la partie inférieure de piston par la couche intermédiaire (5, 11, 15) en matériau élastomère et réalisée éventuellement en forme de couvercle.

6. Piston dérouleur selon l'une quelconque des revendications 2 à 5, dans lequel la partie supérieure de piston (4, 9, 14) et la partie inférieure de piston (3, 8, 13) sont assemblées l'une à l'autre sous la forme d'un assemblage engagé essentiellement conique.

7. Piston dérouleur selon l'une quelconque des revendications 2 à 6, dans lequel la partie supérieure de piston (4, 9, 14) et la partie inférieure de piston (3, 8, 13) sont assemblées l'une à l'autre sous la forme d'un assemblage engagé étagé.

8. Piston dérouleur selon l'une quelconque des revendications 2 à 7, dans lequel la partie supérieure de piston (4, 9, 14) et la partie inférieure de piston (3, 8, 13) sont assemblées l'une à l'autre sous la forme d'un assemblage à rainure et languette.

9. Dispositif de suspension pneumatique pour un véhicule avec un piston dérouleur selon l'une quelconque des revendications 1 à 8.

10. Procédé de fabrication d'un piston dérouleur selon l'une quelconque des revendications 1 à 8, dans lequel après la fabrication d'une première partie de piston celle-ci est munie d'une couche de gomme vulcanisée et on injecte ensuite au moins une autre partie de piston par un procédé de moulage par injection sur la couche de gomme.
